# EUROPEAN PATENT APPLICATION

(11) **EP 4 852 602 A1**
(43) Date of publication of application: **09.12.2026**
(21) Application number: 24921629.2
(22) Date of filing: 13.11.2024
(51) Int. Cl.: H04W 76/14

(54) **BUMP INSTANT-CONNECTION METHOD AND SYSTEM FOR RTK MAIN UNIT AND HANDHELD CONTROLLER**

(30) Priority: 04.02.2024 CN 202410157436
(71) Applicant: Qianxun Spatial Intelligence Inc., Yangpu District Shanghai 200438 (CN); Qianxun Spatial Intelligence Zhejiang Inc., Huzhou, Zhejiang 313201 (CN)
(72) Inventor: WU, Mingpu, Shanghai 200438 (CN); CHEN, Ming, Shanghai 200438 (CN)
(74) Representative: Barker Brettell LLP
(86) International application number: PCT/CN2024/131811
(87) International publication number: WO 2025/161607

(57) **Abstract**

Disclosed in the present application are a bump instant-connection method and system for an RTK main unit and a handheld controller. The method comprises: upon detecting a bump event, an RTK main unit sends broadcast information by means of Bluetooth, the broadcast information comprising device serial number information and RTK state information of the RTK main unit, the device serial number information being in one-to-one correspondence with WiFi information of the RTK main unit, and the RTK state information comprising satellite state information, network state information and fixed solution state information; the handheld controller receives the broadcast information, and analyzes the WiFi information and the RTK state information in the broadcast information; the handheld controller establishes a WiFi connection with the RTK main unit on the basis of the WiFi information, and performs operating mode configuration on the basis of the RTK state information; and the RTK main unit enters a corresponding operating mode on the basis of the configuration of the handheld controller. Automatic connection is achieved by bumping the handheld controller against the RTK main unit, such that the convenience of connection is improved for users, and in addition, RTK states can be sensed in advance before connection, facilitating users to select suitable operating modes in advance, thus achieving rapid operation.

## Description

### CROSS REFERENCE TO RELATED APPLICATION

This application claims priority to Chinese Patent Application No. 202410157436.5 filed on February 4, 2024, which is incorporated herein by reference in its entirety.

### TECHNICAL FIELD

The present application relates to the technical field of satellite positioning, and in particular, to a bump-to-connect technology for an RTK host and a handheld controller.

### BACKGROUND

A real-time kinematic (RTK) receiver system usually includes two parts: an RTK host and a handheld controller. During operation, the RTK host needs to establish a connection with the handheld controller by Bluetooth or WiFi. However, during the connection, a user needs to manually operate the handheld controller, search for Bluetooth or WiFi, and manually click, then the connection with the RTK host can be established, which has certain inconvenience.

In addition, currently, the connection may be established between the RTK host the handheld controller by near field communication (NFC). Of course, in this approach, the handheld controller and the RTK host need to be able to support an NFC function. Under a condition that the handheld controller that has the NFC function approaches the RTK host that also has the NFC function, WiFi information is acquired based on transmitted NFC data, and a WiFi connection is established between the RTK host and the handheld controller.

However, for an RTK host and a handheld controller that do not have the NFC function, a scenario with the above automatic connection cannot be provided.

Accordingly, there is an urgent need for a scheme for an automatic connection between the RTK host and handheld controller.

### SUMMARY

An object of the present application is to provide a bump-to-connect method for an RTK host and a handheld controller. An automatic connection is achieved by tapping the RTK host with the handheld controller, so that convenience of a connection is improved for a user; and an RTK state may be sensed in advance before the connection, so that selection of a suitable operation approach by the user in advance is facilitated, and a rapid operation can be achieved.

In order to solve the above technical problems, embodiments of the present application disclose a bump-to-connect method for an RTK host and a handheld controller including:
sending, by the RTK host upon detecting an occurrence of a tap event, broadcast information containing device serial number information and RTK state information of the RTK host over Bluetooth, wherein the device serial number information and WiFi information of the RTK host are in a one-to-one correspondence, and the RTK state information includes satellite state information, network state information, and fixed solution state information;
receiving, by the handheld controller, the broadcast information, and parsing the WiFi information and the RTK state information in the broadcast information;
establishing, by the handheld controller, a WiFi connection with the RTK host based on the WiFi information, and performing a configuration of operation modes based on the RTK state information; and
entering, by the RTK host, a corresponding one of the operation modes based on the configuration by the handheld controller.

In another preferred embodiment, the performing, by the handheld controller, a configuration of operation modes based on the RTK state information includes:
determining, by the handheld controller, whether a satellite searching state of the RTK host is normal based on the satellite state information; and
prompting, in response to determining that the satellite searching state of the RTK host is abnormal, a user to perform a satellite-based and ground-based switching.

In another preferred embodiment, the performing, by the handheld controller, a configuration of operation modes based on the RTK state information includes:
determining, by the handheld controller, whether a network state of the RTK host is normal based on the network state information; and
prompting, in response to determining that the network state of the RTK host is abnormal, a user whether to perform a switching on a communication network; and
performing a configuration on the communication network based on selection of the user.

In another preferred embodiment, the performing, by the handheld controller, a configuration of operation modes based on the RTK state information includes:
determining, by the handheld controller, whether the RTK host is in a fixed solution state based on the fixed solution state information;
prompting, in response to determining that the RTK host is not in the fixed solution state, a user whether to perform a switching on the operation modes; and
configuring the operation modes based on selection of a user.

In another preferred embodiment, the RTK host detects whether the tap event occurs based on acceleration information measured by an IMU built in the RTK host.

In another preferred embodiment, the receiving, by the handheld controller, the broadcast information includes:
detecting, by the handheld controller, whether the tap event occurs;
receiving Bluetooth broadcast information when the handheld controller detects the occurrence of the tap event.

In another preferred embodiment, the handheld controller detects whether the tap event occurs based on acceleration information measured by an IMU built in the handheld controller.

In another preferred embodiment, an inertial navigation module, a Bluetooth module, and a WiFi module are built in the RTK host.

In another preferred embodiment, an inertial navigation module, a Bluetooth module, and a WiFi module are built in the handheld controller.

Embodiments of the present application further disclose a system for a tap quick connection between an RTK host and a handheld controller including:
an inertial navigation module configured to detect whether a tap event occurs to the RTK host;
a Bluetooth broadcast module configured to send, when the inertial navigation module detects the tap event occurs to the RTK host, Bluetooth broadcast information containing device serial number information and RTK state information of the RTK host; wherein the device serial number information and WiFi information of the RTK host are in a one-to-one correspondence, and the RTK state information includes satellite state information, network state information, and fixed solution state information;
a Bluetooth receiving module configured to receive the Bluetooth broadcast information sent by the Bluetooth broadcast module;
a parsing module configured to parse the WiFi information and the RTK state information in the Bluetooth broadcast information received by the Bluetooth receiving module;
a WiFi connection module configured to establish a WiFi connection between the handheld controller and the RTK host based on the WiFi information parsed by the parsing module;
a configuration module configured to perform a configuration of operation modes based on the RTK state information parsed by the parsing module; and
an operation module configured to enable the RTK host to enter a corresponding one of the operation modes based on the configuration by the configuration module.

Compared with the related art, main differences and effects of the embodiments of the present application are as follows:
In a bump-to-connect method for an RTK host and a handheld controller according to the embodiments of the present application, the automatic connection is achieved by tapping the RTK host with the handheld controller, so that the convenience of the connection is improved for the user; and the RTK state may be sensed in advance before the connection, so that the selection of the suitable operation approach by the user in advance is facilitated, and the rapid operation can be achieved.

Further, when sending the Bluetooth broadcast information, the RTK host sends a satellite state, the network state, and/or the fixed solution state together, then the handheld controller determines in advance, based on the received Bluetooth broadcast information, whether the operation may be performed directly after the RTK host is connected. Under a condition that a condition for performing the operation directly is not satisfied, the user will select a suitable network and a suitable operation mode in advance, and after being connected, WiFi is directly configured in a suitable operation state, so that the rapid operation can be achieved, improving operation efficiency.

A great number of technical features are recorded in the specification of the present application and distributed in various technical solutions. Under a condition that all possible combinations of the technical features (that is. technical solutions) of the present application are listed, the specification will be excessively lengthy. In order to avoid this problem, the technical features disclosed in the SUMMARY, technical features disclosed in following embodiments and examples, and technical features disclosed in the drawings of the present application may be freely combined with one other to form various new technical solutions (all these technical solutions are considered to have been recorded in the specification) unless such combinations of the technical features are technically infeasible. For example, a feature A + B + C is disclosed in an example, a feature A + B + D + E is disclosed in another example, and the feature C and the feature D are equivalent technical means serving the same function. Technologically, only one of the feature C and the feature D may be used, and both of the feature C and the feature D cannot be used at the same time. Technologically, the feature E may be combined with the feature C, then since it is not feasible technologically, a solution of A + B + C + D should not be considered to have been recorded, and a solution of A + B + C + E should be considered to have been recorded.

### BRIEF DESCRIPTION OF THE DRAWINGS

Fig. 1 is a schematic flowchart of a bump-to-connect method for an RTK host and a handheld controller in an embodiment of the present application;
Fig. 2 is a sketch diagram of an interaction between an RTK host and a handheld controller in a preferred embodiment of an embodiment of the present application;
Fig. 3 is a schematic flowchart of an RTK host side in a preferred embodiment of an embodiment of the present application;
Fig. 4 is a schematic flowchart of a handheld controller side in a preferred embodiment of an embodiment of the present application;
Fig. 5 is a time sequence diagram of a preferred embodiment of an embodiment of the present application; and
Fig. 6 is a schematic structural view of a system for a tap quick connection between an RTK host and a handheld controller in an embodiment of the present application.

### DETAILED DESCRIPTION

In the following description, numerous technical details are proposed in order to make the present application better understood by readers. However, those skilled in the art may understand that the technical solutions claimed by the claims of the present application can be achieved without these technical details or various changes and modifications based on the following embodiments.

Explanation of a part of concepts:
Inertial measurement unit (IMU) and inertial navigation module, which are sensors mainly configured to detect and measure acceleration and rotational motion. The most basic inertial sensor includes an accelerometer and an angular velocity meter (a gyroscope).

Handheld controller, also known as a handheld device, which is an industrial grade rugged mobile phone. It has keys and is generally configured with Android system, installed with surveying and mapping APP software, and is communicated with a mobile station receiver by Bluetooth or WiFi. On the handheld controller APP, a measurement operation is generally executed, measurement data and drawings are stored, or instructions may be sent to the mobile station receiver to perform different measurement services.

RTK host: RTK mobile station receiver.

In order to make objects, technical solutions, and advantages of the present application clearer, embodiments of the present application will be described in further detail below with reference to the drawings.

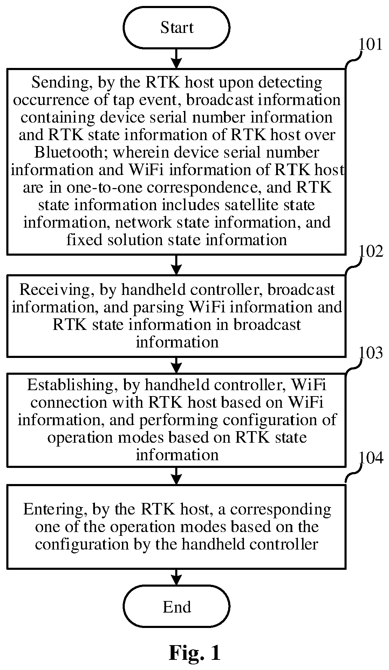

A first embodiment of the present application relates to a bump-to-connect method for an RTK host and a handheld controller, and Fig. 1 is a schematic flowchart of the bump-to-connect method for an RTK host and a handheld controller.

In this embodiment, preferably, an inertial navigation module, a Bluetooth module, and a WiFi module are built in the RTK host. An inertial navigation module, a Bluetooth module, and a WiFi module are built in the handheld controller.

Specifically, as shown in Fig. 1, the bump-to-connect method for an RTK host and a handheld controller includes the following steps.

Step 101: sending, by the RTK host upon detecting an occurrence of a tap event, broadcast information containing device serial number information and RTK state information of the RTK host over Bluetooth, wherein the device serial number information and WiFi information of the RTK host are in a one-to-one correspondence, and the RTK state information includes satellite state information, network state information, and fixed solution state information.

In this embodiment, preferably, in step 101, the RTK host detects whether the tap event occurs based on acceleration information measured by the IMU or the inertial navigation module built in the RTK host.

Then, the method proceeds to step 102. Step 102: receiving, by the handheld controller, the broadcast information, and parsing the WiFi information and the RTK state information in the broadcast information.

In this embodiment, preferably, receiving, by the handheld controller, the broadcast information may further include:
detecting, by the handheld controller, whether the tap event occurs;
receiving Bluetooth broadcast information when the handheld controller detects the occurrence of the tap event.

Further, preferably, the handheld controller detects whether the tap event occurs based on acceleration information measured by the IMU or the inertial navigation module built in the handheld controller.

Then, the method proceeds to step 103. Step 103: establishing, by the handheld controller, a WiFi connection with the RTK host based on the WiFi information, and performing a configuration of operation modes based on the RTK state information.

In this embodiment, preferably, the performing, by the handheld controller, a configuration of operation modes based on the RTK state information may further include:
determining, by the handheld controller, whether a satellite searching state of the RTK host is normal based on the satellite state information; and
prompting, under a condition that the satellite searching state of the RTK host is abnormal, a user to perform a satellite-based and ground-based switching.

It should be noted that the satellite state information here mainly includes that whether a satellite is searched, and the number of the searched satellites.

Under a condition that the satellite searching state is abnormal, that is, no satellite is searched or the number of the searched satellites does not satisfy the requirement, the user is prompted to perform the satellite-based and ground-based switching. For example, the user may be prompted to move to an open space for operation.

In this embodiment, preferably, the performing, by the handheld controller, a configuration of operation modes based on the RTK state information may further include:
determining, by the handheld controller, whether a network state of the RTK host is normal based on the network state information; and
prompting, under a condition that the network state of the RTK host is abnormal, a user whether to perform a switching on a communication network; and
performing a configuration on the communication network based on selection of the user.

It should be noted that the network state information here includes accessibility of the communication network and a signal condition of the communication network.

Under a condition that the communication network cannot be connected, or under a condition that a signal of the communication network is relatively weak, the user may be prompted whether to switch to other communication providers.

In this embodiment, preferably, the performing, by the handheld controller, a configuration of operation modes based on the RTK state information may further include:
determining, by the handheld controller, whether the RTK host is in a fixed solution state based on the fixed solution state information;
prompting, under a condition that the RTK host is not in the fixed solution state, a user whether to perform a switching on the operation modes; and
configuring the operation modes based on selection of a user.

It should be noted that the fixed solution state here includes a single point solution state, a floating point solution state, and a fixed solution state. Positioning accuracy corresponding to the three states is improved in sequence. Generally, an RTK receiver needs to be in the fixed solution state during operation.

Then, the method proceeds to step 104. Step 104: entering, by the RTK host, a corresponding one of the operation modes based on the configuration by the handheld controller.

Then, the flow ends.

In this embodiment, when sending the Bluetooth broadcast information, the RTK host sends the satellite state, the network state, and/or the fixed solution state together, then the handheld controller determines in advance, based on the received Bluetooth broadcast information, whether the operation may be performed directly after the RTK host is connected. Under a condition that the condition for performing the operation directly is not satisfied, the user will select the suitable network and the suitable operation mode in advance, and after being connected, WiFi is directly configured in the suitable operation state, so that the rapid operation can be achieved, improving the operation efficiency.

In summary, in the bump-to-connect method for an RTK host and a handheld controller according to the embodiments of the present application, the automatic connection is achieved by tapping the RTK host with the handheld controller, so that the convenience of use is improved for the user; and the RTK state may be sensed in advance before the connection, so that the selection of the suitable operation approach by the user in advance is facilitated, achieving the rapid operation.

In order to better understand the technical solutions of the specification, description is made below in conjunction with a preferred embodiment. Details of the preferred embodiment are listed mainly to facilitate understanding but not to limit the protection scope of the present application.

The technical solution of the preferred embodiment includes:
(1) building an inertial navigation module in an RTK host, building Bluetooth and a WiFi module in the RTK host;
(2) broadcasting (BLE broadcasting), when the inertial navigation module of the RTK host senses a tap, a serial number (WiFi SSID), a satellite searching state, a network state, and a fixed solution state of the RTK host by Bluetooth;
(3) parsing, after the broadcast is received, a WiFi name corresponding to the serial number by a handheld controller, and actively establishing a connection;
(4) determining, when the handheld controller establishes the connection with the RTK host, whether the connected RTK host directly performs an operation based on the satellite searching state, the network state, and the fixed solution state received;
(5) under a condition that the satellite searching state is normal, the network is normal, and the fixed solution state is normal, there is no prompt;
(6) under a condition that there is a condition that is not unsatisfied, prompting, by the handheld controller, a user during the connection and prompting the user to perform a switching based on a current environment.

In the technical solution of the preferred embodiment, the user makes the RTK host broadcast its own information by tapping to trigger the handheld controller to be connected. The Bluetooth broadcast information sent by the RTK host further contains a satellite state, a network state, and a fixed solution state. The user may be prompted of a current RTK state before the connection, and may be guided to perform a 4G mode switching, a satellite-based and ground-based switching, and the like, so that the convenience of the connection is improved for the user; and the RTK state is sensed before the connection, so that the rapid operation is achieved.

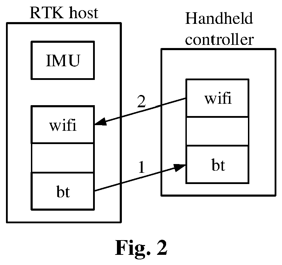

Fig. 2 is a sketch diagram of an interaction between an RTK host and a handheld controller in the preferred embodiment.

Specifically, as shown in Fig. 2, an interaction process between the RTK host and the handheld controller includes:
1. sending a broadcast by Bluetooth (bt) of the RTK host, wherein broadcast information contains a device serial number (WiFi SSID), a satellite state, a network state, and a fixed solution state;
2. parsing, after a Bluetooth broadcast is received, a received broadcast information by the handheld controller to acquire WiFi information of the RTK host and RTK state information; and

initiating a connection by WiFi of the handheld controller, prompting a user based on the RTK state information, and guiding a client to select a suitable network, a suitable satellite and ground base, and the like.

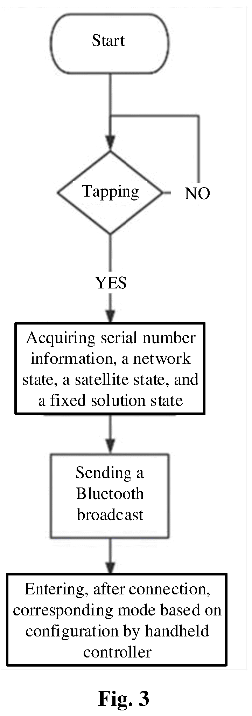

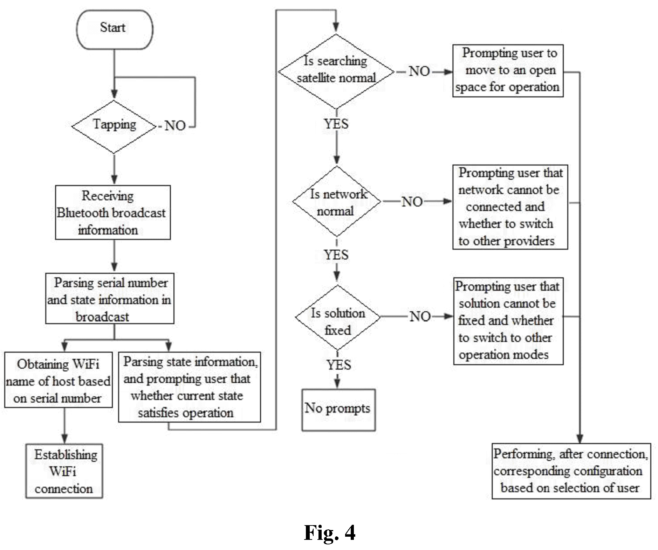

Fig. 3 is a schematic flowchart of an RTK host side in the preferred embodiment, and Fig. 4 is a schematic flowchart of a handheld controller side in the preferred embodiment.

Specifically, as shown in Fig. 3 and Fig. 4.

A flow on the RTK host side includes:
1. detecting in real time whether there is a tap, wherein a tap state may be read by an IMU, and after the IMU detects shaking, the tap is considered to occur;
2. reading local WiFi information and RTK state information (including a satellite state, a network state, a fixed solution state) in a configuration file; and
3. sending a Bluetooth broadcast containing the WiFi information and the RTK state information.

A flow on the RTK handheld controller side includes:
1. detecting in real time, when an RTK host is not connected, whether there is a tap by an RTK handheld controller (determining based on an IMU in the handheld controller), and attempting to receive broadcast information after the tap is detected;
2. receiving the broadcast information, parsing WiFi information and RTK state information in a broadcast; and
3. actively connecting to WiFi, prompting a user based on the state information, and guiding a client to select a suitable network, a suitable satellite and ground base, and the like.

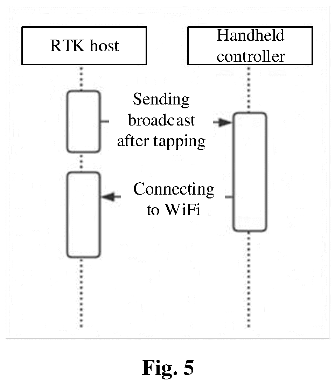

Fig. 5 is a time sequence diagram of the preferred embodiment. Specifically, as shown in Fig. 5, the time sequence diagram includes:
1. sending a Bluetooth broadcast after an RTK is tapped;
2. receiving broadcast information by a handheld controller; and
3. establishing a connection by the handheld controller.

In the preferred embodiment, the RTK host and the handheld controller are automatically connected by tapping the RTK host with the handheld controller (the user does not need to operate the handheld controller), and the user may be informed of the RTK state in advance before the connection, so that the selection of the suitable operation approach by the user in advance is facilitated, a suitable operation state is directly configured after the connection is established, and the rapid operation can be achieved.

Various method embodiments of the present application may be implemented as software, hardware, firmware, and the like. Regardless of whether the present application is implemented as software, hardware, or firmware, instruction codes may be stored in any type of computer-accessible memory (for example, a permanent or modifiable, volatile or nonvolatile, solid or non-solid, fixed or replaceable medium, and the like). Similarly, the memory may be, for example, a programmable array logic (PAL), a random access memory (RAM), a programmable read only memory (), a read-only memory (ROM), an electrically erasable programmable read only memory (EEPROM), a magnetic disk, an optical disk, a digital versatile disk (DVD), and the like.

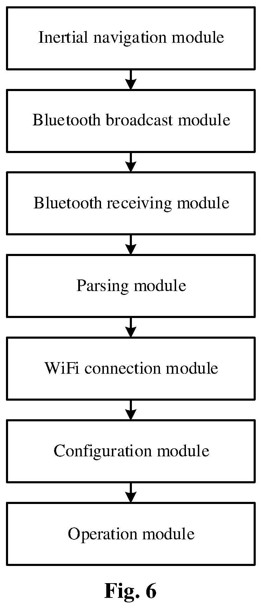

A second embodiment of the present application relates to a system for a tap quick connection between an RTK host and a handheld controller, and Fig. 6 is a schematic structural view of the system for a tap quick connection between an RTK host and a handheld controller.

Specifically, as shown in Fig. 6, the system for a tap quick connection between an RTK host and a handheld controller includes:
an inertial navigation module configured to detect whether a tap event occurs to the RTK host;
a Bluetooth broadcast module configured to send, when the inertial navigation module detects the tap event occurs to the RTK host, Bluetooth broadcast information containing device serial number information and RTK state information of the RTK host; wherein the device serial number information and WiFi information of the RTK host are in a one-to-one correspondence, and the RTK state information includes satellite state information, network state information, and fixed solution state information;
a Bluetooth receiving module configured to receive the Bluetooth broadcast information sent by the Bluetooth broadcast module;
a parsing module configured to parse the WiFi information and the RTK state information in the Bluetooth broadcast information received by the Bluetooth receiving module;
a WiFi connection module configured to establish a WiFi connection between the handheld controller and the RTK host based on the WiFi information parsed by the parsing module;
a configuration module configured to perform a configuration of operation modes based on the RTK state information parsed by the parsing module; and
an operation module configured to enable the RTK host to enter a corresponding one of the operation modes based on the configuration by the configuration module.

This embodiment is a system embodiment corresponding to the first embodiment, and may be implemented in cooperation with the first embodiment. The related technical details mentioned in the first embodiment are still effective in this embodiment and are not described in detail here in order to reduce repetition. Accordingly, the related technical details mentioned in this embodiment is applicable to the first embodiment.

It should be noted that respective modules mentioned in the above system embodiment of the present application are logical modules; physically, a logical module may be either a physical module or a part of a physical module, and may further be implemented as a combination of a plurality of physical modules; a physical embodiment of these logical modules is not the most important, and a combination of functions implemented by these logical modules is the key to solving the technical problems proposed in the present application. Further, in order to highlight innovative part of the present application, modules that are not closely related to solving the technical problems proposed in the present application are not introduced in respective device embodiments of the present application, and this does not mean that the device embodiments do not have other modules.

It should be noted that those skilled in the art should understand that functions achieved by respective modules shown in the device embodiments may be understood with reference to the related description of the above method. Functions of respective blocks shown in the system embodiment may be implemented by programs (executable instructions) running on a processor or may be implemented by a specific logic circuit. Under a condition that it is implemented in the form of a software functional module and sold or used as an independent product, the system of the embodiments of the specification may be stored in a computer-readable storage medium. Based on this understanding, the technical solutions of the embodiments of the specification or the part that makes contribution to the related art may be essentially embodied in the form of a software product, the software product is stored in a storage medium and contains a plurality of instructions for causing a computer device (which may be a personal computer, a server, or a network device) to execute all or a part of the methods in respective embodiments of the specification. The storage medium includes various media that may store program codes, such as, a USB flash disk, a mobile hard disk, a read only memory (ROM), a magnetic disk, or an optical disk. Thus, the embodiments of the specification are not limited by any specific combination of hardware and software.

It should be noted that, in the present application, the relational terms, such as first and second, are used merely to distinguish one entity or operation from another entity or operation, and do not necessarily require or imply any actual such relationship or order among these entities or operations. Moreover, the terms "comprise", "include", or any other variants thereof, are intended to represent a non-exclusive inclusion, so that a process, method, article or device including a series of elements includes not only those elements, but also other elements that are not explicitly listed or elements inherent to such a process, method, article or device. Without more constraints, the elements following an expression "comprise/include..." do not exclude the existence of additional identical elements in the process, method, article or device that includes the elements. In the present application, if it is mentioned that a certain act is executed based on a certain element, it means that the act is executed based on at least the element, which includes two situations: the act is executed based on only the element, and the act is executed based on the element and other elements. Expressions such as a plurality of numbers, a plurality of times, a plurality of types include 2 in number, 2 times, 2 types, 2 or more in number, 2 or more times, 2 or more types.

Although the present application has been illustrated and described with reference to certain preferred embodiments thereof, those skilled in the art should understand that various changes in form and details may be made without departing from the gist and scope of the present application.

## Claims

1. A bump-to-connect method for an RTK host and a handheld controller, comprising; sending, by the RTK host upon detecting an occurrence of a tap event, broadcast information containing device serial number information and RTK state information of the RTK host over Bluetooth, wherein the device serial number information and WiFi information of the RTK host are in a one-to-one correspondence, and the RTK state information comprises satellite state information, network state information, and fixed solution state information;
receiving, by the handheld controller, the broadcast information, and parsing the WiFi information and the RTK state information in the broadcast information;
establishing, by the handheld controller, a WiFi connection with the RTK host based on the WiFi information, and performing a configuration of operation modes based on the RTK state information; and
entering, by the RTK host, a corresponding one of the operation modes based on the configuration by the handheld controller.

2. The bump-to-connect method for an RTK host and a handheld controller according to claim 1, wherein the performing, by the handheld controller, a configuration of operation modes based on the RTK state information comprises:
determining, by the handheld controller, whether a satellite searching state of the RTK host is normal based on the satellite state information; and
prompting, in response to determining that the satellite searching state of the RTK host is abnormal, a user to perform a satellite-based and ground-based switching.

3. The bump-to-connect method for an RTK host and a handheld controller according to claim 1, wherein the performing, by the handheld controller, a configuration of operation modes based on the RTK state information comprises:
determining, by the handheld controller, whether a network state of the RTK host is normal based on the network state information; and
prompting, in response to determining that the network state of the RTK host is abnormal, a user whether to perform a switching on a communication network; and
performing a configuration on the communication network based on selection of the user.

4. The bump-to-connect method for an RTK host and a handheld controller according to claim 1, wherein the performing, by the handheld controller, a configuration of operation modes based on the RTK state information comprises:
determining, by the handheld controller, whether the RTK host is in a fixed solution state based on the fixed solution state information;
prompting, in response to determining that the RTK host is not in the fixed solution state, a user whether to perform a switching on the operation modes; and
configuring the operation modes based on selection of a user.

5. The bump-to-connect method for an RTK host and a handheld controller according to claim 1, wherein the RTK host detects whether the tap event occurs based on acceleration information measured by an IMU built in the RTK host.

6. The bump-to-connect method for an RTK host and a handheld controller according to claim 1, wherein the receiving, by the handheld controller, the broadcast information comprises:
detecting, by the handheld controller, whether the tap event occurs;
receiving Bluetooth broadcast information when the handheld controller detects the occurrence of the tap event.

7. The bump-to-connect method for an RTK host and a handheld controller according to claim 6, wherein the handheld controller detects whether the tap event occurs based on acceleration information measured by an IMU built in the handheld controller.

8. The bump-to-connect method for an RTK host and a handheld controller according to any one of claims 1 to 7, wherein an inertial navigation module, a Bluetooth module, and a WiFi module are built in the RTK host.

9. The bump-to-connect method for an RTK host and a handheld controller according to any one of claims 1 to 7, wherein an inertial navigation module, a Bluetooth module, and a WiFi module are built in the handheld controller.

10. A bump-to-connect system for an RTK host and a handheld controller, comprising:
an inertial navigation module configured to detect whether a tap event occurs to the RTK host;
a Bluetooth broadcast module configured to send, when the inertial navigation module detects the tap event occurs to the RTK host, Bluetooth broadcast information containing device serial number information and RTK state information of the RTK host; wherein the device serial number information and WiFi information of the RTK host are in a one-to-one correspondence, and the RTK state information comprises satellite state information, network state information, and fixed solution state information;
a Bluetooth receiving module configured to receive the Bluetooth broadcast information sent by the Bluetooth broadcast module;
a parsing module configured to parse the WiFi information and the RTK state information in the Bluetooth broadcast information received by the Bluetooth receiving module;
a WiFi connection module configured to establish a WiFi connection between the handheld controller and the RTK host based on the WiFi information parsed by the parsing module;
a configuration module configured to perform a configuration of operation modes based on the RTK state information parsed by the parsing module; and
an operation module configured to enable the RTK host to enter a corresponding one of the operation modes based on the configuration by the configuration module.
